# FASCICULE DE BREVET EUROPEEN

(11) **EP 1 201 120 B1**
(45) Date de publication et mention de la délivrance du brevet: **05.11.2003**
(21) Numéro de dépôt: 01402343.6
(22) Date de dépôt: 12.09.2001
(51) Int. Cl.: B62B 1/22, A01K 5/00, A01K 5/02

(54) **Brouette de transport et de distribution**
Transport- und Verteilschubkarre
Wheelbarrow for transporting and distributing

(30) Priorité: 18.10.2000 FR 0013305
(43) Date de publication de la demande: 02.05.2002
(73) Titulaire: La Buvette, 08090 Tournes (FR)
(72) Inventeur: Gustin, Jean-Pierre, 08000 Charleville-Mezieres (FR)
(74) Mandataire: Kaspar, Jean-Georges

(56) Documents cités:
- GB-A- 1 558 667
- US-A- 2 330 944
- US-A- 2 426 081

## Description

L'invention est relative à une brouette utilisable notamment pour le transport d'aliments solides en vue de distribuer lesdits aliments solides au bétail d'élevage. Voir p.e. le document US-A-2330944.

Actuellement, la distribution des aliments solides ou des compléments d'aliments pour le bétail se fait mécaniquement ou manuellement.

Lorsque la distribution des aliments telle que granulés, farine, tourteaux, bouchons ou autres aliments solides se fait mécaniquement, on utilise une machine désileuse et mélangeuse, auto-motrice ou attelée à un tracteur. Cette distribution mécanique, coûteuse en raison du coût des matériels correspondants, est effectuée principalement dans des élevages de grande taille.

Lorsque la distribution des aliments solides se fait manuellement, par exemple dans des élevages de petite taille, l'éleveur utilise un moyen de transport tel qu'un chariot ou une brouette, ou encore des seaux et un moyen de distribution manuelle telle qu'une pelle, une écope ou un godet. Alternativement, l'éleveur peut également soulever le sac d'aliments pour bétail sur son épaule et le répandre irrégulièrement en se déplaçant le long de la table d'alimentation.

La distribution manuelle, plus économique que la distribution mécanique, ne donne cependant pas satisfaction : les opérations de distribution manuelle sont souvent longues et fastidieuses et la distribution est très approximative. En outre, les aliments doivent être manipulés deux fois dans le cas d'une brouette ou d'un chariot : une première fois pour charger le chariot ou la brouette, et une deuxième fois pour distribuer les aliments transportés par le chariot et la brouette.

L'invention a pour but de remédier aux inconvénients précités, en fournissant une nouvelle brouette permettant un approvisionnement direct du silo à la table d'alimentation, et permettant également une distribution directe sur la table d'alimentation, en évitant de nouvelles manipulations des aliments.

Un autre but de l'invention est de fournir un moyen de chargement, de transport et de distribution fournissant une bonne précision de distribution lors du déplacement régulier de ce moyen de transport.

L'invention a pour objet une brouette, utilisable notamment pour le transport d'aliments solides en vue de distribuer lesdits aliments solides au bétail d'élevage, comportant une cuve supportée par une roue et au moins une poignée, la cuve comportant un orifice de distribution dont l'ouverture et la fermeture sont commandables par actionnement de ladite poignée.

Selon d'autres caractéristiques de l'invention :
- ladite poignée d'actionnement est montée à pivotement par rapport à la cuve, de manière à ouvrir, puis à fermer l'orifice de distribution en tournant la poignée dans un premier sens de pivotement, puis dans le sens opposé audit premier sens.
- l'orifice de distribution est fermé par une trappe coulissante montée dans un cadre.
- la brouette comporte des crans de réglage de la trappe coulissante dans une position choisie.
- des moyens élastiques de maintien sont prévus pour maintenir la trappe coulissante dans une position choisie lors du déplacement de la brouette.
- la partie inférieure du cadre se raccorde à une conformation évasée formant goulotte de distribution.
- la cuve est conformée pour supporter des paliers de pivotement de ladite poignée d'actionnement et des paliers de rotation de la roue.
- la cuve est fabriquée en matière synthétique, par exemple en polyéthylène, de préférence par rotomoulage.
- la cuve comporte une double paroi et se prolonge du côté de la poignée par au moins une béquille de support.
- la brouette comporte un moyen d'indexation indiquant la position de ladite poignée d'actionnement correspondant à une position choisie d'ouverture de distribution.

L'invention sera mieux comprise grâce à la description qui va suivre donnée à titre d'exemple non limitatif en référence aux dessins annexés dans lesquels :

La figure 1 représente schématiquement une vue en perspective d'une brouette selon l'invention.

La figure 2 représente schématiquement une vue en perspective partielle agrandie du détail II de la figure 1.

La figure 3 représente schématiquement une vue partielle en perspective agrandie du détail III de la figure 1.

La figure 4 représente schématiquement une vue partielle en coupe selon le plan IV-IV de la figure 1 d'une brouette selon l'invention, en position avec trappe totalement ouverte.

La figure 5 représente schématiquement une vue partielle en coupe analogue à la figure 4 d'une brouette selon l'invention, en position de transport.

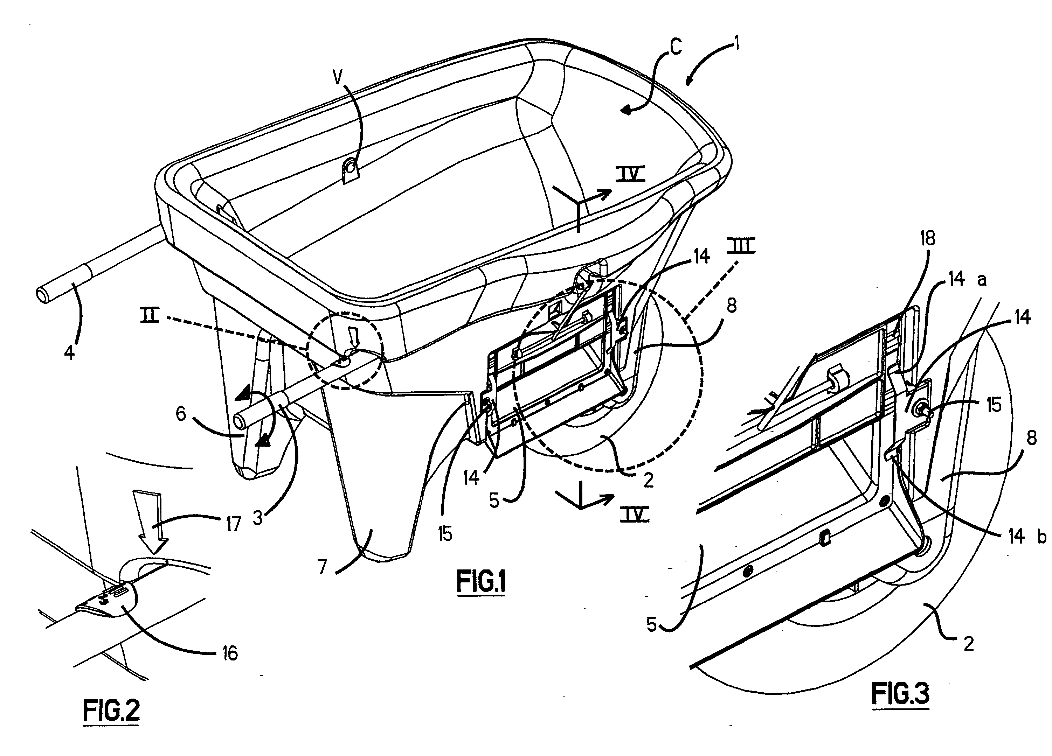

En référence aux figures 1 à 5, les éléments identiques ou fonctionnellement équivalents sont repérés par des chiffres de référence identiques.

La brouette selon l'invention désignée dans son ensemble par la référence 1 comporte une cuve C, une roue 2, une première poignée 3 et une deuxième poignée 4.

Selon l'invention, la cuve C comporte un orifice 5 de distribution dont l'ouverture et la fermeture sont commandables par actionnement d'une poignée, par exemple de la première poignée 3.

La cuve C est de préférence réalisée en une matière synthétique, par exemple en polyéthylène. Avantageusement, la cuve C est réalisée par rotomoulage, ce qui présente l'avantage de constituer du côté des poignées 3 et 4 des prolongements 6 et 7 formant béquille de support de la brouette en position de repos. La cuve C présente avantageusement une conformation adaptée pour supporter les paliers de rotation de la roue et les paliers de pivotement d'au moins une poignée 3 ou 4. A cet effet, la cuve C se prolonge à l'avant par une conformation de support de palier de la roue 2 et comporte une double paroi destinée à être percée pour la fixation d'un palier de pivotement de poignée 3 ou 4 au moyen d'une vis V de fixation traversante.

Bien que la poignée 4 ne soit pas une poignée d'actionnement, la poignée 4 est avantageusement montée à pivotement comme la poignée 3 d'actionnement, de manière à suivre le mouvement des mains de l'utilisateur.

Chaque poignée métallique 3 ou 4 est ainsi constituée par un tube pivotant se prolongeant vers la cuve C par rapport à laquelle elle pivote autour d'un axe sensiblement horizontal, dans les deux sens de pivotement.

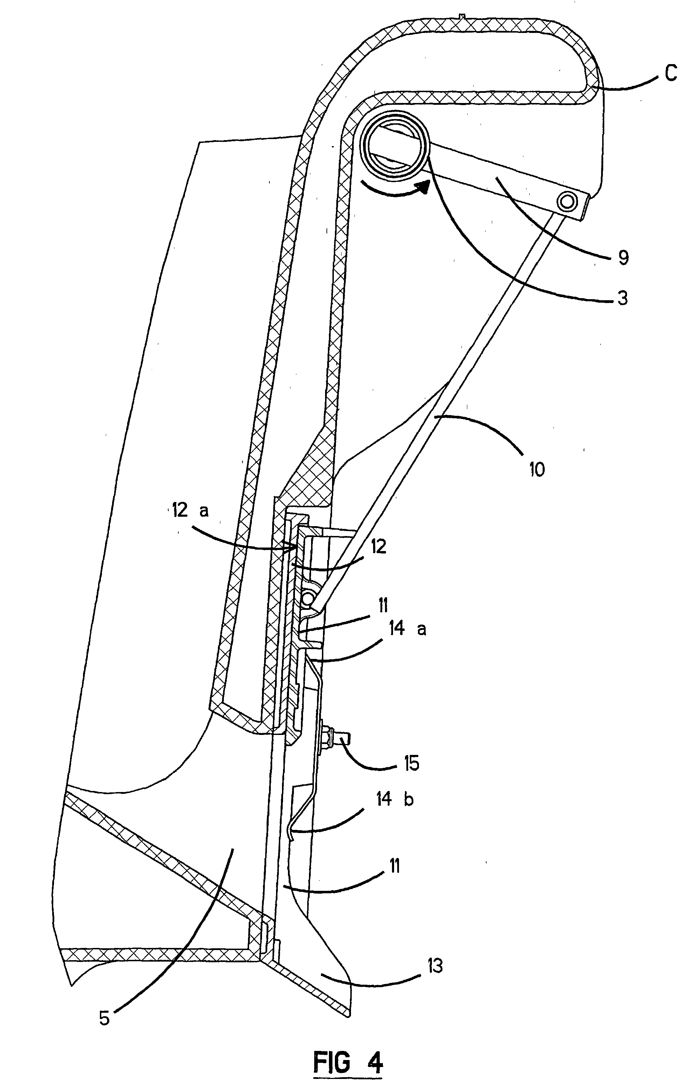

Sur la figure 4, le pivotement complet de la poignée 3 vers la gauche déplace un levier 9 solidaire de la poignée 3, qui déplace à son tour une tringle 10 articulée à une extrémité au levier 9 et à l'autre extrémité à une trappe 11 de fermeture de l'orifice 5. Le pivotement de la poignée 3 assure ainsi le relèvement de la tringle 10 et l'ouverture de la trappe 11 d'obturation de l'orifice 5.

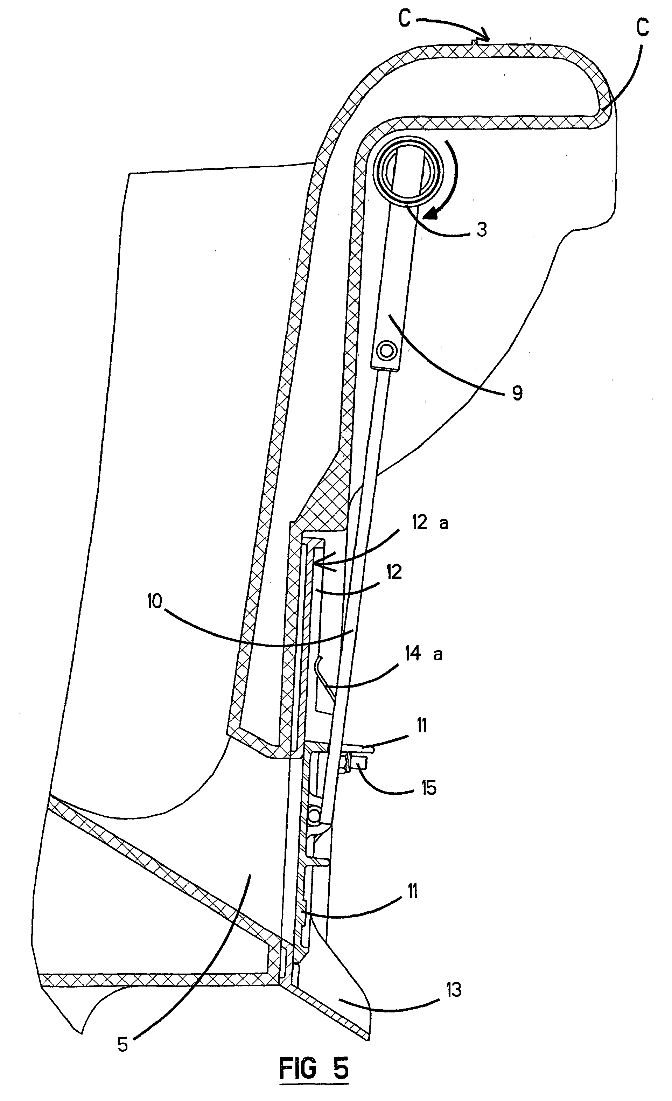

Sur la figure 5 le pivotement en sens opposé de la poignée 3 déplace le levier 9 vers le bas et provoque la descente de la tringle 10 et la fermeture de l'orifice 5 au moyen de la trappe 11.

La trappe 11 de distribution est de préférence une trappe coulissante montée dans un cadre 12 fixé à la cuve de la brouette par un vissage, rivetage ou tout autre moyen de solidarisation.

Le cadre 12 présente une partie inférieure assurant un écoulement régulier des aliments passant par l'orifice 5 : à cet effet, il est avantageux de prolonger ou de constituer la partie inférieure du cadre 12 pour former une goulotte 13 de distribution présentant sensiblement la même pente que la pente d'écoulement de l'orifice 5 de la cuve C.

Le cadre métallique 12 présente une surface de guidage 12a contre laquelle la trappe 11 est appliquée par deux lames de ressort 14 fixées par vissage à la cuve C par des vis traversantes 15. Chaque lame de ressort 14 présente une conformation avec deux ailes élastiques 14a, 14b. Les extrémités des ailes élastiques 14a, 14b appliquent la trappe 11 contre la surface 12a de guidage du cadre 12.

Cette disposition assure que la trappe 11 dans sa position fermée (figure 5) est appliquée contre la surface 12a en quatre points correspondant aux extrémités des ailes élastiques 14a, 14b.

Cette élasticité de la trappe 11, durant son mouvement vertical descendant, lui permet éventuellement de contourner des obstacles (grains solides par ex.) empêchant la fermeture totale de l'orifice 5 et ceci sans risque mécanique (forçage).

Pour accroître la précision de distribution, on peut prévoir plusieurs positions d'ouverture parmi lesquelles l'éleveur pourra choisir celle qui lui convient en fonction de la nature des aliments à distribuer et de sa vitesse de déplacement le long de la table d'alimentation.

Ces différentes positions d'ouverture peuvent s'obtenir par un pivotement plus ou moins important de la poignée 3. Pour reproduire toujours la même position d'ouverture, on prévoit avantageusement que la brouette comporte un moyen d'indexation indiquant la position de la poignée d'actionnement 3. A cet effet, on peut prévoir une plaquette 16 solidaire de la poignée 3 : cette plaquette graduée 16 coopère avec un index 17 fixé sur la cuve C ou venant de matière avec la cuve C, pour indiquer un état de fermeture ou d'ouverture complète ou un état choisi parmi plusieurs états intermédiaires d'ouverture partielle de la trappe 11 et de l'orifice 5 d'écoulement de matériaux solides.

Cette position d'indexation relative entre la graduation de la plaquette 16 et la flèche 17 correspond à la position d'ouverture choisie de la trappe 11 appliquée par les ressorts 14 contre le cadre 12. Pour éviter toute modification d'ouverture lors du déplacement de la brouette, on prévoit avantageusement des crans 18 de réglage sur la trappe 11 : ces crans 18 de réglage permettent aux extrémités des ailes élastiques 14a, 14b de pénétrer dans les creux définis par ces crans 18, de manière à empêcher tout glissement vertical de la trappe 11 lors du transport de la brouette, en particulier en cas de fortes trépidations de la cuve provenant d'un déplacement sur un sol inégal.

Bien que particulièrement destinée à la distribution d'aliments solides, la brouette selon l'invention peut, dans d'autres variantes de réalisation de la cuve, être utilisée pour toute autre application nécessitant une distribution régulière d'un matériau au cours du déplacement de la brouette : distribution de granulés, de gravier, ou d'autres matériaux de toute nature.

## Revendications

1. Brouette (1), utilisable notamment pour le transport d'aliments solides en vue de distribuer lesdits aliments solides au bétail d'élevage, comportant une cuve (C) supportée par une roue (2) et au moins une poignée (3), la cuve (C) comportant un orifice (5) de distribution, **caractérisée en ce que** l'ouverture et la fermeture dudit orifice (5) de distribution sont commandables par actionnement de ladite poignée (3).

2. Brouette selon la Revendication 1, **caractérisée en ce que** ladite poignée (3) d'actionnement est montée à pivotement par rapport à la cuve (C), de manière à ouvrir, puis à fermer l'orifice (5) de distribution en tournant la poignée dans un premier sens de pivotement, puis dans le sens opposé audit premier sens.

3. Brouette selon la Revendication 1 ou la Revendication 2, **caractérisée en ce que** l'orifice de distribution (5) est fermé par une trappe (11) coulissante montée dans un cadre (12).

4. Brouette selon la Revendication 3, **caractérisée en ce que** la brouette (1) comporte des crans (18) de réglage de la trappe (11) coulissante dans une position choisie.

5. Brouette selon la Revendication 3 ou la Revendication 4, **caractérisée en ce que** des moyens élastiques (14) de maintien sont prévus pour maintenir la trappe coulissante (11) dans une position choisie lors du déplacement de la brouette (1).

6. Brouette selon les revendications 3, 4 et 5, **caractérisée en ce que** les moyens élastiques de maintien (14) permettent la fermeture totale, quelles que soient la granulométrie et la texture des aliments distribués, sans risque mécanique.

7. Brouette selon la Revendication 3, **caractérisée en ce que** la partie inférieure du cadre (12) se raccorde à une conformation évasée (13) formant goulotte de distribution.

8. Brouette (1) selon l'une quelconque des Revendications précitées, **caractérisée en ce que** la cuve (C) est conformée pour supporter des paliers de pivotement de ladite poignée d'actionnement (3) et des paliers de rotation de la roue.

9. Brouette selon la Revendication 7, **caractérisée en ce que** la cuve (C) est fabriquée en matière synthétique, par exemple en polyéthylène, de préférence par rotomoulage.

10. Brouette selon la Revendication 8, **caractérisée en ce que** la cuve (C) comporte une double paroi et se prolonge du côté de la poignée par au moins une béquille (6, 7) de support.

11. Brouette (1) selon l'une quelconque des Revendications précitées, **caractérisée en ce que** la brouette (1) comporte un moyen d'indexation (16, 17) indiquant la position de ladite poignée d'actionnement (3) correspondant à une position choisie d'ouverture de distribution.

## Patentansprüche

1. Schubkarren (1), der insbesondere zum Transport von festem Futter verwendbar ist, um dieses feste Futter an Zuchtvieh auszugeben, mit einem Behälter (C), der auf einem Rad (2) aufliegt, und mit mindestens einem Griff (3), wobei der Behälter (C) eine Ausgabeöffnung (5) umfaßt, **dadurch gekennzeichnet, daß** das Öffnen und Schließen der Abgabeöffnung (5) durch Betätigung des Griffes (3) steuerbar ist.

2. Schubkarren nach Anspruch 1, **dadurch gekennzeichnet, daß** der Betätigungsgriff (3) relativ zum Behälter (C) verschwenkbar montiert ist, um die Ausgabeöffnung (5) zu öffnen, anschließend zu schließen, indem der Griff in eine erste Verschwenkrichtung, dann in die der ersten Richtung entgegengesetzte Richtung, gedreht wird.

3. Schubkarren nach Anspruch 1 oder Anspruch 2, **dadurch gekennzeichnet, daß** die Ausgabeöffnung (5) durch eine Schiebeklappe (11) verschlossen ist, welche in einem Rahmen (12) montiert ist.

4. Schubkarren nach Anspruch 3, **dadurch gekennzeichnet, daß** der Schubkarren (1) Kerben (18) zum Einstellen der Schiebeklappe (11) in einer gewählten Stellung umfaßt.

5. Schubkarren nach Anspruch 3 oder Anspruch 4, **dadurch gekennzeichnet, daß** elastische Haltemittel (14) vorgesehen sind, um die Schiebeklappe (11) beim Schieben des Schubkarrens (1) in einer gewählten Stellung zu halten.

6. Schubkarren nach den Ansprüchen 3, 4 und 5, **dadurch gekennzeichnet, daß** die elastischen Haltemittel (14) unabhängig von der Körnung und der Beschaffenheit des ausgegebenen Futters ein vollständiges Schließen ohne mechanische Gefahr zulassen.

7. Schubkarren nach Anspruch 3, **dadurch gekennzeichnet, daß** der untere Teil des Rahmens (12) an eine sich erweiternde Formgebung (13) angeschlossen ist, die eine Ausgaberutsche bildet.

8. Schubkarren (1) nach einem der vorhergehenden Ansprüche, **dadurch gekennzeichnet, daß** der Behälter (C) so gebildet ist, daß er Verschwenklager für den Betätigungsgriff (3) und Drehlager für das Rad trägt.

9. Schubkarren nach Anspruch 7, **dadurch gekennzeichnet, daß** der Behälter (C) aus einem Kunststoff, z.B. aus Polyethylen, vorzugsweise durch Rotationsformen, hergestellt ist.

10. Schubkarren nach Anspruch 8, **dadurch gekennzeichnet, daß** der Behälter (C) eine Doppelwand aufweist und sich auf der Seite des Griffes in mindestens einer Tragestütze (6, 7) fortsetzt.

11. Schubkarren (1) nach einem der vorhergehenden Ansprüche, **dadurch gekennzeichnet, daß** der Schubkarren (1) ein Anzeigemittel (16, 17) umfaßt, das die Stellung des Betätigungsgriffes (3) anzeigt, die einer gewählten Ausgabeöffnungsstellung entspricht.

## Claims

1. A wheelbarrow (1), for use in particular for transporting solid feed with the intention of distributing the said solid feed to livestock being reared, having a trough (C) supported by a wheel (2) and at least one handle (3), the trough (C) having a distribution aperture (5), opening and closing of the said distribution aperture (5) being capable of control by actuating the said handle (3).

2. A wheelbarrow according to Claim 1, **characterised in that** the said actuating handle (3) is mounted to pivot with respect to the trough (C) such that the distribution aperture (5) is opened and then closed by turning the handle in a first direction of pivoting and then in the opposite direction to the said first direction.

3. A wheelbarrow according to Claim 1 or Claim 2, **characterised in that** the distribution aperture (5) is closed by a sliding hatch (11) mounted in a frame (12).

4. A wheelbarrow according to Claim 3, **characterised in that** the wheelbarrow (1) has notches (18) for keeping the sliding hatch (11) in a selected position.

5. A wheelbarrow according to Claim 3 or Claim 4, **characterised in that** resilient holding means (14) are provided in order to hold the sliding hatch (11) in a selected position when the wheelbarrow (1) is moved.

6. A wheelbarrow according to Claims 3, 4 and 5, **characterised in that** the resilient holding means (14) allow complete closure whatever the grain size and texture of the feed distributed, without any mechanical risk.

7. A wheelbarrow according to Claim 3, **characterised in that** the lower part of the frame (12) is connected to a portion in a widened shape (13) forming a distribution chute.

8. A wheelbarrow (1) according to any one of the preceding claims, **characterised in that** the trough (C) is shaped to support bearings for pivoting of the said actuating handle (3) and bearings for rotation of the wheel.

9. A wheelbarrow according to Claim 7, **characterised in that** the trough (C) is made from synthetic material, for example polyethylene, preferably by rotational moulding.

10. A wheelbarrow according to Claim 8, **characterised in that** the trough (C) has a double wall and is prolonged on the handle side by at least one support leg (6, 7).

11. A wheelbarrow (1) according to any one of the preceding claims, **characterised in that** the wheelbarrow (1) has an indexing means (16, 17) indicating that position of the said actuating handle (3) corresponding to a selected opening position for distribution.
